# EUROPEAN PATENT SPECIFICATION

(11) **EP 4 325 668 B1**
(45) Date of publication and mention of the grant of the patent: **20.05.2026**
(21) Application number: 23191637.0
(22) Date of filing: 16.08.2023
(51) Int. Cl.: H01R 4/64, H02H 9/04

(54) **CONNECTOR GROUNDING STRUCTURE**
VERBINDERERDUNGSSTRUKTUR
STRUCTURE DE MISE À LA TERRE DE CONNECTEUR

(30) Priority: 17.08.2022 JP 2022130241
(43) Date of publication of application: 21.02.2024
(73) Proprietor: Yokogawa Electric Corporation, Tokyo 180-8750 (JP)
(72) Inventor: Sekigami, Yuji, Tokyo 180-8750 (JP); Kihara, Noriaki, Tokyo 180-8750 (JP)
(74) Representative: Hoffmann Eitle

(56) References cited:
- US-A1- 2005 265 011
- US-A1- 2022 094 079
- US-B1- 6 283 771

## Description

### TECHNICAL FIELD

The present disclosure relates to a connector grounding structure.

### BACKGROUND

A connector grounding structure comprising a connector that includes a first connector part and a second connector part connectable to each other and a grounding component is known (see, for example, JP S56-88626 A (PTL 1)).

### CITATION LIST

### Patent Literature

PTL 1: JP S56-88626 A

Further related art may be found in US 6 283771 B1 which describes grounding techniques to improve the performance of an RF coaxial lighting protector, in US 2005/0265011 A1 which describes a grounding spring for a removable tunnel module and in US 2022/094079 A1 which describes coaxial cable bonding/grounding blocks.

### SUMMARY

### (Technical Problem)

The connector grounding structure as described in PTL 1 is a structure in which the first connector part and the second connector part are connected via the grounding component (that is, by connecting the first connector part to the grounding component and the grounding component to the second connector part), making it difficult to achieve space saving.

It would be helpful to provide a connector grounding structure that facilitates space saving.

### (Solution to Problem)

The present invention is defined by the appended independent claim. The dependent claims describe optional features and distinct embodiments.

An aspect of the present disclosure is as follows.
[1] A connector grounding structure comprising:
   a connector including a first connector part and a second connector part connectable to each other; and
   a grounding component, wherein
   the first connector part has an outer circumferential surface portion that protrudes and a first step surface extending radially outward from a base end of the outer circumferential surface portion,
   the second connector part has an inner circumferential surface portion connectable to the outer circumferential surface portion and a second step surface extending radially outward from a tip end of the inner circumferential surface portion,
   the grounding component has an insertion portion that is electrically conductive and into which the outer circumferential surface portion is insertable, and
   in a state where the outer circumferential surface portion is inserted into the insertion portion and directly connected to the inner circumferential surface portion, the connector is capable of holding the insertion portion between the first step surface and the second step surface.

According to this configuration, the first connector part and the second connector part are connectable without the grounding component intervening, facilitating space saving.

[2]
The connector grounding structure of aspect [1], wherein the outer circumferential surface portion has a washer into which the outer circumferential surface portion is insertable, and
in a state where the outer circumferential surface portion is inserted into the insertion portion and the washer and connected to the inner circumferential surface portion without the grounding component intervening, the connector is capable of holding the insertion portion and the washer between the first step surface and the second step surface.

According to this configuration, a gap between the first step surface and the second step surface when the first connector part and the second connector part are connected is adjustable via the washer.

[3]
The connector grounding structure of aspect [1] or [2], wherein the outer circumferential surface portion has a nut that is screwable onto the outer circumferential surface portion, and
in a state where the outer circumferential surface portion is inserted into the insertion portion and screwed into the nut farther toward a tip end of the outer circumferential surface portion than the insertion portion and connected to the inner circumferential surface portion without the grounding component intervening, the connector is capable of holding the insertion portion and the nut between the first step surface and the second step surface.

According to this configuration, the grounding component may be held on the first connector part by the nut screwed onto the outer circumferential surface portion even before the second connector part is connected.

[4]
According to an example not forming part of the invention, the connector is operable to connect an electronic device and a cable.

According to this configuration, the space saving of the connector grounding structure improves a degree of freedom in designing or adopting an electronic device.

[5]
According to the invention, the connector is operable to connect an antenna and a cable.

According to this configuration, the space saving of the connector grounding structure improves a degree of freedom in designing or adopting an antenna.

[6]
The connector grounding structure of aspect [5], wherein the grounding component has an electrically conductive mounting portion integrated with the insertion portion, and
the mounting portion is attachable to a support structure that is electrically conductive and grounded.

According to this configuration, the grounding component may also serve a support function for the antenna.

[7]
According to the invention, the insertion portion constitutes a ground plane of the antenna, the insertion portion having an annular shape and the outer diameter OD2 being set to λ/2 or more, λ representing the wavelength used.

According to this configuration, the insertion portion of the grounding component may also serve as the ground plane of the antenna.

[8]
The connector grounding structure of any one of aspects [1] to [7], wherein the grounding component constitutes a surge protector.

According to this configuration, a surge protector connector grounding structure that facilitates space saving may be realized.

### (Advantageous Effect)

According to the present disclosure, a connector grounding structure that facilitates space saving is provided.

### BRIEF DESCRIPTION OF THE DRAWINGS

In the accompanying drawings:
FIG. 1 is a schematic diagram of a wireless communication device having a connector grounding structure according to Example 1 not forming part of the invention;
FIG. 2A is a side view of a grounding component illustrated in FIG. 1, and FIG. 2B is a front view of the grounding component illustrated in FIG. 2A;
FIG. 3 is a front view of a modification of the grounding component illustrated in FIG. 1;
FIG. 4 is a schematic diagram of the connector grounding structure illustrated in FIG. 1 before connector connection;
FIG. 5 is a schematic diagram of a wireless communication device having a connector grounding structure according to Example 2 not forming part of the invention in addition to the connector grounding structure according to Example 1;
FIG. 6 is a schematic diagram of the connector grounding structure according to Example 3 not forming part of the invention;
FIG. 7 is a perspective diagram of a grounding component illustrated in FIG. 6; and
FIG. 8A is a side view of a grounding component of the connector grounding structure according to Embodiment 4 according to the invention, and FIG. 8B is a front view of the grounding component illustrated in FIG. 8A.

### DETAILED DESCRIPTION

The following is a detailed illustrative description of embodiments of the present disclosure, with reference to the drawings.

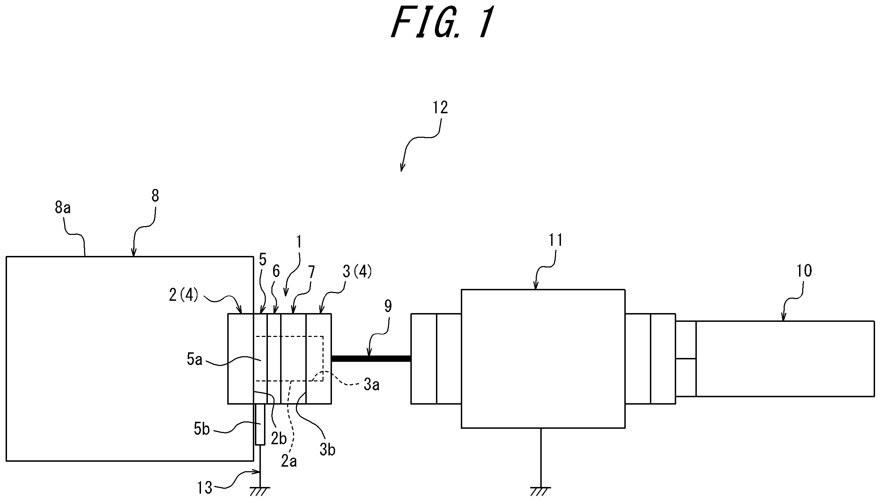

As illustrated in FIG. 1, a connector grounding structure 1 according to Example 1 not forming part of the invention comprises a connector 4 that includes a first connector part 2 and a second connector part 3 that are connectable to each other, a grounding component 5 that constitutes a surge protector, a washer 6, and a nut 7. According to the connector grounding structure 1 of Example 1, an electrical surge may be handled. The connector grounding structure 1 is not limited to a configuration in which the grounding component 5 constitutes a surge protector.

In the connector grounding structure 1 of Example 1, the connector 4 connects one end of a cable 9 to an electronic device 8. The connector grounding structure 1 is not limited to a structure that connects the electronic device 8 and the cable 9 by the connector 4. For example, the connector grounding structure 1 may be configured as a structure that connects an antenna 10 and the cable 9 by the connector 4, as in the connector grounding structure 1 according to Example 2 not forming part of the invention described below.

According to Example 1, the electronic device 8 constitutes a main body of a wireless communication device 12, and another end of the cable 9 is connected to the antenna 10 via an antenna surge protector 11 (for example, any commercial product) (that is, by connecting the other end of the cable 9 to the antenna surge protector 11 and the antenna surge protector 11 to the antenna 10). That is, FIG. 1 illustrates the wireless communication device 12 comprising the electronic device 8 that constitutes the main body of the wireless communication device 12, the cable 9, the antenna surge protector 11, and the antenna 10.

The connector grounding structure 1 is not limited to a structure that connects the electronic device 8 that constitutes the main body of the wireless device 12 to the cable 9 by the connector 4, and may be configured as a structure that connects the electronic device 8 that does not constitute the main body of the wireless communication device 12 to the cable 9 by the connector 4. The type of electronic device 8 is not particularly limited, and may be, for example, a measurement device used in a plant.

The type of connector 4 is not particularly limited. For example, the connector 4 may be a coaxial connector such as a Sub Miniature type A (SMA) connector or Bayonet Neill-Concelman (BNC) connector for connecting a coaxial cable as the cable 9. The cable 9 is not limited to a coaxial cable, and the connector 4 is not limited to a coaxial connector.

The first connector part 2 includes an outer circumferential surface portion 2a that protrudes and a first step surface 2b extending radially outward from a base end of the outer circumferential surface portion 2a. The second connector part 3 includes an inner circumferential surface portion 3a that is connectable to the outer circumferential surface portion 2a and a second step surface 3b extending radially outward from a tip end of the inner circumferential surface portion 3a. For example, the first connector part 2 constitutes a jack and the second connector part 3 constitutes a plug.

The first connector part 2 is integrated into the electronic device 8, and the second connector part 3 is integrated into the one end of the cable 9. This is not a limitation, the first connector part 2 may be integrated into the one end of the cable 9, and the second connector part 3 may be integrated into the electronic device 8.

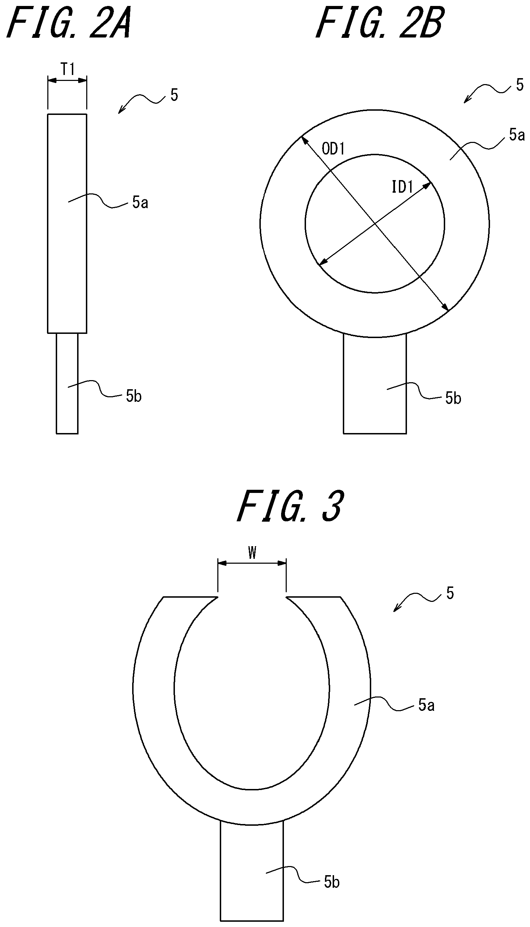

As illustrated in FIG. 2A and FIG. 2B, the grounding component 5 has an insertion portion 5a that is electrically conductive and into which the outer circumferential surface portion 2a is insertable. The insertion portion 5a has an annular shape. The insertion portion 5a is not limited to an annular shape, and may have a ring shape other than a circular ring, such as a square ring. The insertion portion 5a may have a C-shape with an opening between ends separated by a width W that does not allow the outer circumferential surface portion 2a to pass through, as in the modification illustrated in FIG. 3.

Size of the insertion portion 5a is not particularly limited. For example, the insertion portion 5a may have a thickness T1 of about 1 mm, an inner diameter ID1 of about 6 mm, and an outer diameter OD1 of about 10 mm.

The grounding component 5 has a protrusion 5b that protrudes radially outward from the insertion portion 5a and is electrically conductive for connection to a grounding cable 13 (see FIG. 1) . The grounding component 5 is not limited to a configuration that includes the protruding portion 5b. For example, the grounding cable 13 may be connected directly to the insertion portion 5a. The grounding component 5 may be grounded by a component other than the grounding cable 13.

Returning to FIG. 1, the outer circumferential surface area 2a is insertable into the washer 6. In other words, the washer 6 has an opening into which the outer circumferential surface portion 2a is insertable. Thickness, inner diameter, and outer diameter of the washer 6 may be set according to the size of the insertion portion 5a and other factors.

The nut 7 may be screwed onto the outer circumferential surface portion 2a. In other words, the nut 7 has an opening into which the outer circumferential surface portion 2a is insertable and an inner circumferential surface that allows screwing onto the outer circumferential surface portion 2a.

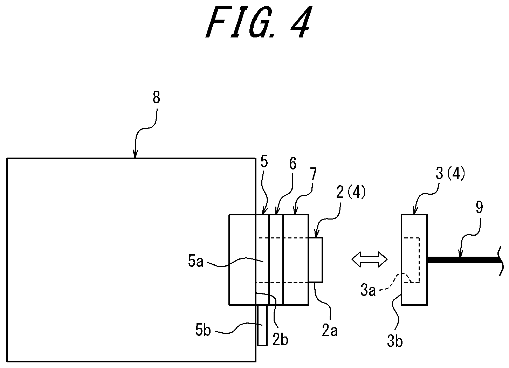

As illustrated in FIG. 4, the first connector part 2 and the second connector part 3 are connectable to and disconnectable from each other in a state where the outer circumferential surface portion 2a is inserted into the insertion portion 5a and the washer 6 and screwed into the nut 7 farther toward a tip end of the outer circumferential surface portion 2a than the insertion portion 5a.

As illustrated in FIG. 1, in a state where the outer circumferential surface part 2a is inserted into the insertion portion 5a and the washer 6, screwed into the nut 7 farther toward the tip end than the insertion portion 5a, and connected to the inner circumferential surface part 3a without the grounding component 5 intervening, the connector 4 is capable of holding the insertion portion 5a, the washer 6, and the nut 7 between the first step surface 2b and second step surface 3b.

According to the configuration using the washer 6, a gap between the first step surface 2b and the second step surface 3b when the first connector part 2 and the second connector part 3 are connected is adjustable via the washer 6. The connector grounding structure 1 uses one of the washer 6 according to the present embodiment, but is not limited to this, and may be configured to use two or more of the washer 6 or to not use the washer 6.

According to the configuration using the nut 7, the grounding component 5 may be held on the first connector 2 by the nut 7 screwed onto the outer circumferential surface portion 2a, even before the second connector 3 is connected, as illustrated in FIG. 4. The connector grounding structure 1 uses one of the nut 7 according to the present embodiment, but is not limited to this, and may be configured to use two or more of the nut 7 or to not use the nut 7.

In the example illustrated in FIG. 1, the connector grounding structure 1 is configured such that the outer circumferential surface portion 2a is inserted into the insertion portion 5a, the washer 6, and the nut 7 in that order, but is not limited to this example. For example, the connector grounding structure 1 may be configured such that the outer circumferential surface portion 2a is inserted in the order of the washer 6, the insertion portion 5a, and the nut 7, or the order of the insertion portion 5a, the nut 7, and the washer 6, or the order of the washer 6, the nut 7, and the insertion portion 5a, or in any other order. However, from the viewpoint of holding the grounding component 5 to the first connector part 2 by the nut 7 even before connecting the second connector part 3, the outer circumferential surface part 2a is preferably inserted such that the insertion portion 5a and the nut 7 are in that order.

The connector grounding structure 1 may be configured without the washer 6 and without the nut 7

According to the connector grounding structure 1 of Example 1, the first connector part 2 and the second connector part 3 are connectable directly without the grounding component 5 intervening (that is, without being connected by connecting the first connector part 2 to the grounding component 5 and the grounding component 5 to the second connector part 3), which facilitates space saving. According to the connector grounding structure 1 of the present embodiment, the space saving of the connector grounding structure 1 improves a degree of freedom in designing or adopting the electronic device 8. In particular, when the electronic device 8 has an insulating enclosure 8a, grounding through the insulating enclosure 8a is not possible, and therefore the connector grounding structure 1 of the present embodiment is particularly suitable for the electronic device 8 that has the insulating enclosure 8a.

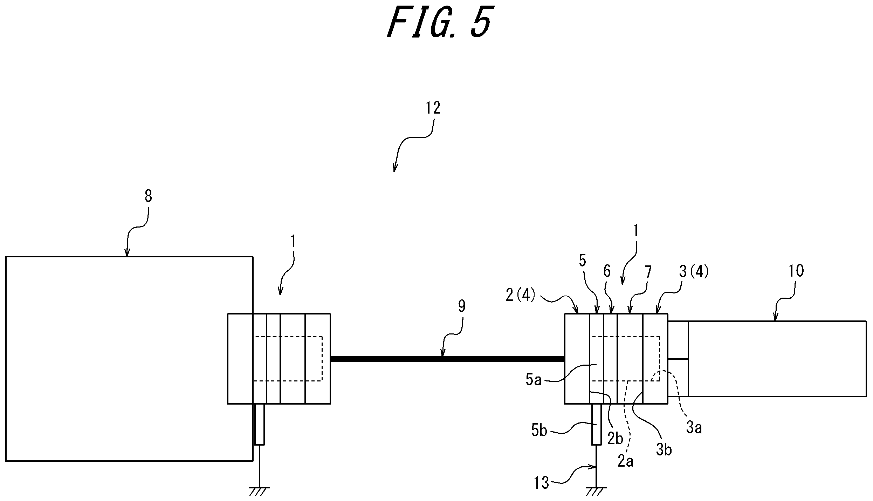

The connector grounding structure 1 is configured as a structure in which the antenna 10 and the cable 9 are connected by the connector 4, as in Example 2 of the connector grounding structure 1 illustrated in FIG. 5. In the connector grounding structure 1 of Example 2, the connector 4 connects the antenna 10 to the other end of the cable 9. The wireless communication device 12 illustrated in FIG. 5 has, in addition to the connector grounding structure 1 of Example 1 described above, the connector grounding structure 1 of Example 2. According to Example 2, the space saving of the connector grounding structure 1 improves a degree of freedom in designing or adopting the antenna 10.

In Example 2, the first connector part 2 is integrated into the other end of the cable 9, and the second connector part 3 is integrated into the antenna 10. This is not a limitation, the first connector part 2 may be integrated into the antenna 10 and the second connector part 3 may be integrated into the other end of the cable 9.

The size of the insertion portion 5a is not particularly limited according to Example 2. For example, as in Example 1, the insertion portion 5a may have the thickness T1 of about 1 mm, the inner diameter ID1 of about 6 mm, and the outer diameter OD1 of about 10 mm.

In Example 2, the connector grounding structure 1 is not limited to a configuration in which the grounding component 5 constitutes a surge protector.

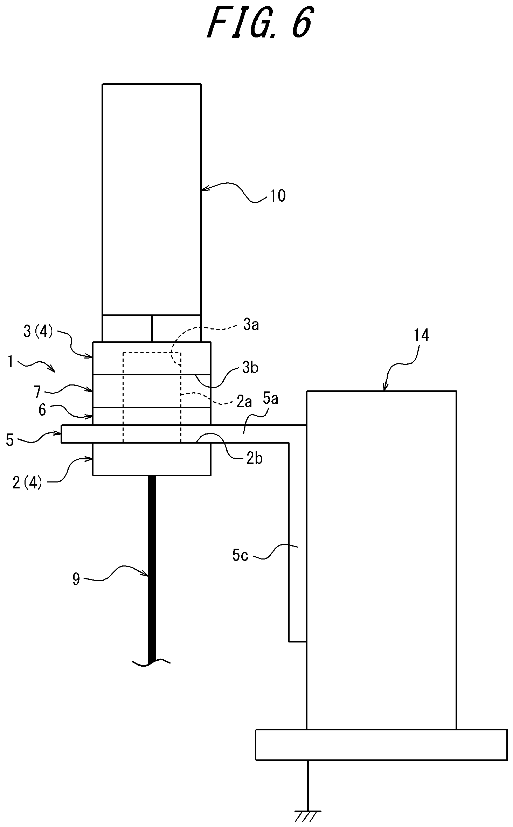

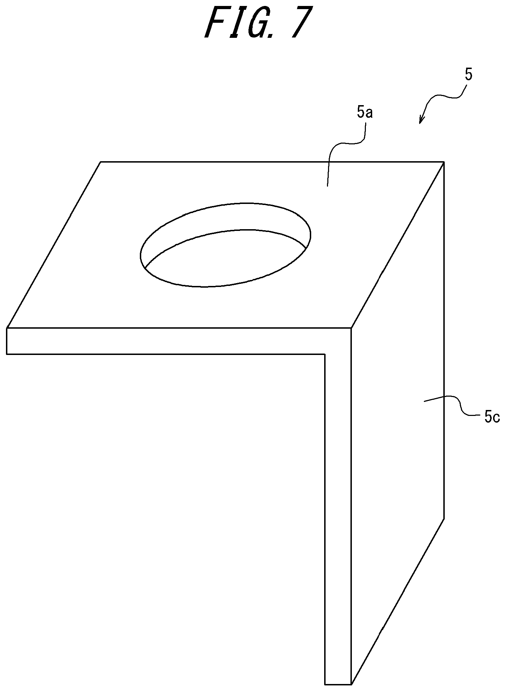

When the connector grounding structure 1 is configured as a structure that connects the antenna 10 and the cable 9 by the connector 4, as in Example 2, the grounding component 5 may also serve a support function for the antenna 10, as in Example 3 not forming part of the invention illustrated in FIG. 6 and FIG. 7.

In Example 3, the grounding component 5 has a mounting portion 5c that is electrically conductive and integrally connected to the insertion portion 5a, and the mounting portion 5c is attachable to a support structure 14 that is electrically conductive (for example, a metal pole) and grounded. In Example 3, the mounting portion 5c attached to the insertion portion 5a is provided with a right angle relative to the insertion portion 5a, so that the overall structure of the grounding component 5 has an L-shape in side view. The grounding component 5 is not limited to this L-shaped structure.

In Example 3, the grounding component 5 may be grounded by attaching the mounting portion 5c that is electrically conductive to the support structure 14 that is electrically conductive. Therefore, there is no need to provide the protrusion 5b (see Fig. 2A, FIG. 2B, and the like) that is electrically conductive for connection to the grounding cable 13.

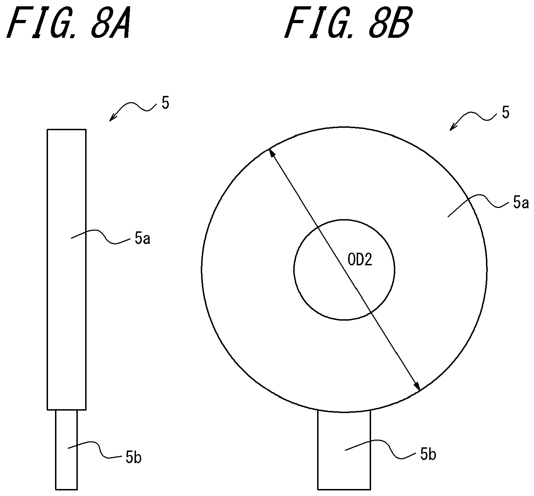

When the connector grounding structure 1 is configured as a structure that connects the antenna 10 and the cable 9 by the connector 4, as in Example 2, the connector grounding structure 1 may be configured such that the insertion portion 5a constitutes a ground plane for the antenna 10, as in Embodiment 4 illustrated in FIG. 8. According to this configuration, the insertion portion 5a of the grounding component 5 may also serve as the ground plane of the antenna 10. The configuration of Embodiment 4 is particularly suitable, for example, when the antenna 10 is a monopole antenna.

In Embodiment 4 as claimed, the insertion portion 5a has an annular shape and the outer diameter OD2 is set to λ/2 or more because the insertion portion 5a constitutes the ground plane of the antenna 10. Here, λ represents the wavelength used. For example, the wavelength λ of the 2 GHz band (frequency range from 1920 MHz to 2200 MHz) is about 15 cm, and the outer diameter OD2 of the insertion portion 5a in this case is about 7.5 cm or more. The insertion portion 5a may form a ring shape other than a circular ring, as long as the insertion portion 5a constitutes the ground plane of the antenna 10.

The configuration of the insertion portion 5a of Embodiment 4 may be combined with the configuration of Example 3 described above. In other words, the grounding component 5 may be configured to have the insertion portion 5a of Embodiment 4 and the mounting portion 5c of Example 3.

The present disclosure is not limited to the embodiments described above and various modifications are possible without departing from the scope of the appended claims.

## Claims

1. A connector grounding structure (1) comprising:
a connector (4) including a first connector part (2) and a second connector part (3) connectable to each other; and
a grounding component (5), wherein
the first connector part has an outer circumferential surface portion (2a) that protrudes and a first step surface (2b) extending radially outward from a base end of the outer circumferential surface portion,
the second connector part has an inner circumferential surface portion (3a) connectable to the outer circumferential surface portion and a second step surface (3b) extending radially outward from a tip end of the inner circumferential surface portion,
the grounding component has an insertion portion (5a) that is electrically conductive and into which the outer circumferential surface portion is insertable,
in a state where the outer circumferential surface portion is inserted into the insertion portion and directly connected to the inner circumferential surface portion, the connector is capable of holding the insertion portion between the first step surface and the second step surface,
**characterized in that**
the connector is operable to connect an antenna (10) and a cable (9), and
the insertion portion constitutes a ground plane of the antenna, the insertion portion having an annular shape and the outer diameter (OD2) being set to λ/2 or more, λ representing the wavelength used.

2. The connector grounding structure (1) of claim 1, wherein the outer circumferential surface portion (2a) has a washer (6) into which the outer circumferential surface portion is insertable, and
in a state where the outer circumferential surface portion is inserted into the insertion portion (5a) and the washer directly and connected to the inner circumferential surface portion (3a), the connector (4) is capable of holding the insertion portion and the washer between the first step surface (2b) and the second step surface (3b).

3. The connector grounding structure (1) of claim 1, wherein the outer circumferential surface portion (2a) has a nut (7) that is screwable onto the outer circumferential surface portion, and
in a state where the outer circumferential surface portion is inserted into the insertion portion (5a) and screwed into the nut farther toward a tip end of the outer circumferential surface portion than the insertion portion and directly connected to the inner circumferential surface portion (3a), the connector (4) is capable of holding the insertion portion and the nut between the first step surface (2b) and the second step surface (3b).

4. The connector grounding structure (1) of claim 1, wherein the grounding component (5) has an electrically conductive mounting portion (5c) integrated with the insertion portion (5a), and
the mounting portion is attachable to a support structure (14) that is electrically conductive and grounded.

5. The connector grounding structure (1) of claim 1, wherein the grounding component (5) constitutes a surge protector (11).

## Patentansprüche

1. Verbindererdungsstruktur (1), umfassend:
einen Verbinder (4), einschließlich eines ersten Verbinderteils (2) und eines zweiten Verbinderteils (3), die miteinander verbindbar sind; und
eine Erdungskomponente (5), wobei
das erste Verbinderteil einen Außenumfangsflächenabschnitt (2a), der vorsteht, und eine erste Stufenfläche (2b), die sich radial nach außen von einem Basisende des Außenumfangsflächenabschnitts erstreckt, aufweist,
das zweite Verbinderteil einen Innenumfangsflächenabschnitt (3a), der mit dem Außenumfangsflächenabschnitt verbindbar ist, und eine zweite Stufenfläche (3b), die sich radial nach außen von einem Spitzenende des Innenumfangsflächenabschnitts erstreckt, aufweist,
die Erdungskomponente einen Einführungsabschnitt (5a) aufweist, der elektrisch leitfähig ist und in den der Außenumfangsflächenabschnitt einführbar ist,
in einem Zustand, in dem der Außenumfangsflächenabschnitt in den Einführungsabschnitt eingeführt ist und unmittelbar mit dem Innenumfangsflächenabschnitt verbunden ist, wobei der Verbinder dazu in der Lage ist, den Einführungsabschnitt zwischen der ersten Stufenfläche und der zweiten Stufenfläche zu halten,
**dadurch gekennzeichnet, dass**
der Verbinder betriebsfähig ist, um eine Antenne (10) und ein Kabel (9) zu verbinden, und
der Einführungsabschnitt eine Massefläche der Antenne bildet, wobei der Einführungsabschnitt eine ringförmige Form aufweist und der Außendurchmesser (OD2) auf λ/2 oder mehr eingestellt ist, wobei λ die verwendete Wellenlänge darstellt.

2. Verbindererdungsstruktur (1) nach Anspruch 1, wobei der Außenumfangsflächenabschnitt (2a) eine Unterlegscheibe (6) aufweist, in die der Außenumfangsflächenabschnitt einführbar ist, und
in einem Zustand, in dem der Außenumfangsflächenabschnitt unmittelbar in den Einführungsabschnitt (5a) und in die Unterlegscheibe eingeführt ist und mit dem Innenumfangsflächenabschnitt (3a) verbunden ist, der Verbinder (4) dazu in der Lage ist, den Einführungsabschnitt und die Unterlegscheibe zwischen der ersten Stufenfläche (2b) und der zweiten Stufenfläche (3b) zu halten.

3. Verbindererdungsstruktur (1) nach Anspruch 1, wobei der Außenumfangsflächenabschnitt (2a) eine Mutter (7) aufweist, die auf den Außenumfangsflächenabschnitt aufschraubbar ist, und
in einem Zustand, in dem der Außenumfangsflächenabschnitt in den Einführungsabschnitt (5a) eingeführt ist und in die Mutter weiter in Richtung eines Spitzenendes des Außenumfangsflächenabschnitts als der Einführungsabschnitt eingeschraubt ist und unmittelbar mit dem Innenumfangsflächenabschnitt (3a) verbunden ist,
wobei der Verbinder (4) in der Lage ist, den Einführungsabschnitt und die Mutter zwischen der ersten Stufenfläche (2b) und der zweiten Stufenfläche (3b) zu halten.

4. Verbindererdungsstruktur (1) nach Anspruch 1, wobei die Erdungskomponente (5) einen elektrisch leitfähigen Montageabschnitt (5c) aufweist, der mit dem Einführungsabschnitt (5a) integriert ist, und
der Montageabschnitt an einer Tragstruktur (14) anbringbar ist, die elektrisch leitfähig und geerdet ist.

5. Verbindererdungsstruktur (1) nach Anspruch 1, wobei die Erdungskomponente (5) einen Überspannungsschutz (11) bildet.

## Revendications

1. Structure de mise à la terre de connecteur (1) comprenant :
un connecteur (4) incluant une première partie de connecteur (2) et une deuxième partie de connecteur (3) raccordables l'une à l'autre ; et
un composant de mise à la terre (5), dans laquelle
la première partie de connecteur présente une portion de surface périphérique externe (2a) qui fait saillie et une première surface d'épaulement (2b) s'étendant radialement vers l'extérieur à partir d'une extrémité de base de la portion de surface périphérique externe,
la deuxième partie de connecteur présente une portion de surface périphérique interne (3a) raccordable à la portion de surface périphérique externe et une deuxième surface d'épaulement (3b) s'étendant radialement vers l'extérieur à partir d'une extrémité de pointe de la portion de surface périphérique interne,
le composant de mise à la terre présente une portion d'insertion (5a), électriquement conductrice, dans laquelle la portion de surface périphérique externe est insérable,
dans un état dans lequel la portion de surface périphérique externe est insérée dans la portion d'insertion et directement raccordée à la portion de surface périphérique interne, le connecteur est apte à maintenir la portion d'insertion entre la première surface d'épaulement et la deuxième surface d'épaulement **caractérisée en ce que**
le connecteur est apte à raccorder une antenne (10) et un câble (9), et
la portion d'insertion constitue un plan de masse de l'antenne, la portion d'insertion présentant une forme annulaire et le diamètre extérieur (OD2) étant réglé à λ/2 ou plus, λ représentant la longueur d'onde utilisée.

2. Structure de mise à la terre de connecteur (1),
selon la revendication 1, dans laquelle la portion de surface périphérique externe (2a)
présente une rondelle (6) dans laquelle la portion de surface périphérique externe est insérable, et
dans un état dans lequel la portion de surface périphérique externe est insérée dans la portion d'insertion (5a),
et la rondelle et connectée à la portion de surface périphérique interne (3a), le connecteur (4) est apte à maintenir la portion d'insertion et la rondelle entre la première surface d'épaulement (2b), et la deuxième surface d'épaulement (3b).

3. Structure de mise à la terre de connecteur (1), selon la revendication 1, dans laquelle la portion de surface périphérique externe (2a)
présente un écrou (7) apte à être vissé sur la portion de surface périphérique externe, et
dans un état dans lequel la portion de surface périphérique externe est insérée dans la portion d'insertion (5a),
et vissée dans l'écrou plus vers une extrémité de pointe de la portion de surface périphérique externe que la portion d'insertion et directement raccordée à la portion de surface périphérique interne (3a),
le connecteur (4) est apte à maintenir la portion d'insertion et l'écrou entre la première surface d'épaulement (2b) et la deuxième surface d'épaulement (3b).

4. Structure de mise à la terre de connecteur (1) selon la revendication 1, dans laquelle le composant de mise à la terre (5)
présente une portion de montage (5c) électriquement conductrice, intégrée à la portion d'insertion (5a), et
la portion de montage est apte à être fixée à une structure de support (14) électriquement conductrice et mise à la terre.

5. Structure de mise à la terre de connecteur (1) selon la revendication 1, dans laquelle le composant de mise à la terre (5) constitue un parafoudre (11).
